# EUROPÄISCHE PATENTSCHRIFT

(11) **EP 1 989 069 B1**
(45) Veröffentlichungstag und Bekanntmachung des Hinweises auf die Patenterteilung: **02.06.2010**
(21) Anmeldenummer: 07711701.8
(22) Anmeldetag: 27.02.2007
(51) Int. Cl.: B60G 9/00

(54) **GUSSLENKER MIT INTEGRIERTER STAHLBUCHSE**
CAST MEMBER HAVING AN INTEGRATED STEEL SLEEVE
BRAS DE SUSPENSION EN FONTE A DOUILLE EN ACIER INTEGREE

(30) Priorität: 01.03.2006 DE 102006009441
(43) Veröffentlichungstag der Anmeldung: 12.11.2008
(73) Patentinhaber: SAF-HOLLAND GmbH, 63856 Bessenbach (DE)
(72) Erfinder: DREWES, Olaf, 63743 Aschaffenburg (DE)
(74) Vertreter: Bauer, Clemens
(86) Internationale Anmeldenummer: PCT/EP2007/001687
(87) Internationale Veröffentlichungsnummer: WO 2007/098927

(56) Entgegenhaltungen:
- EP-A2- 0 830 959
- WO-A-2004/054825
- DE-A1- 10 060 312
- US-A1- 2005 156 462
- US-A1- 2006 157 950

## Beschreibung

Die vorliegende Erfindung bezieht sich auf eine Aufhängungseinheit für ein Fahrzeug, insbesondere Kraftfahrzeug, vorzugsweise mit einer Starrachse, sowie ein Verfahren zur Herstellung einer Aufhängungseinheit für ein entsprechendes Fahrzeug.

Aufhängungseinheiten für Kraftfahrzeuge sind hinlänglich aus dem Stand der Technik bekannt. Diese sind üblicherweise aus einem Längslenker ausgebildet, welcher auf einer Fahrzeugachse angeordnet ist, an einer Seite schwenkbar mit einem Rahmenelement des Fahrzeugs verbunden und auf der anderen Seite federnd gelagert ist, um eine federnde Lagerung der Fahrzeugachse zu erzielen. Hierbei wird der Längslenker üblicherweise auf die Fahrzeugachse geklemmt oder geschraubt, um einen Kraftschluß zwischen Längslenker und Fahrzeugachse zu erzielen. Eine weitere, aus dem Stand der Technik bekannte Lösung besteht darin, Längslenker und Fahrzeugachse aus schweißbaren Materialien, beispielsweise Stahl, herzustellen und Längslenker und Fahrzeugachse miteinander zu verschweißen.

Problematisch bei den aus dem Stand der Technik bekannten Achsaufhängungseinheiten ist jedoch, daß diese sehr teuer herzustellen sind, bei Herstellung der Komponenten aus schweißbarem Material eine aufgrund des in der Regel komplizierten Stahlgusses hohe Fehlerquote (Lunkeranfälligkeit) aufweisen sowie mechanisch nur begrenzt belastbar sind (Klemm- oder Schraublösung).

So offenbart die WO 2004/054825 A einen gegossenen Längslenker, der einen Aufnahmeabschnitt aufweist, in welchem ein Achselement angeordnet und mit dem Längslenker Kraftschlüssig verbunden ist.

Es ist somit Aufgabe der vorliegenden Erfindung, eine Aufhängungseinheit für ein Fahrzeug sowie ein Verfahren zur Herstellung einer Aufhängungseinheit für ein Fahrzeug, insbesondere Kraftfahrzeug mit einer Starrachse, vorzuschlagen, mittels welchen eine kostengünstige, hohe Kräfte und Momente aufnehmende und zuverlässige Achsaufhängungseinheit bereitgestellt werden.

Diese Aufgabe wird gemäß der Erfindung durch eine Aufhängungseinheit für ein Fahrzeug mit den Merkmalen gemäß Anspruch 1 sowie durch ein Verfahren zur Herstellung einer Aufhängungseinheit für ein Fahrzeug mit den Merkmalen gemäß Anspruch 8 gelöst. Bevorzugte Ausführungsformen sind Gegenstand der abhängigen Unteransprüche.

Erfindungsgemäß ist eine Aufhängungseinheit für ein Fahrzeug, insbesondere Kraftfahrzeug mit einer Starrachse, vorgesehen, umfassend einen Längslenker bzw. Achslenker mit einem Aufhängungsabschnitt, einem Abstützabschnitt sowie einem Achsaufnahmeabschnitt, wobei der Aufhängungsabschnitt ausgelegt ist, dreh- bzw. schwenkbar an einem Rahmenelement des Fahrzeugs angelenkt zu werden, der Längslenker über den Abstützabschnitt an dem Rahmenelement abstützbar und an dem zwischen dem Aufhängungsabschnitt und dem Abstützabschnitt angeordneten Achsaufnahmeabschnitt die Fahrzeugachse anordenbar bzw. befestigbar ist, sowie ein Hohlzylinderelement, wobei der Längslenker aus einem Guß- oder Verbundwerkstoff, und das Hohlzylinderelement aus einem schweißfähigen Material ausgebildet sind, und wobei das Hohlzylinderelement in dem Achsaufnahmeabschnitt angeordnet und mit dem Längslenker form- und/oder kraftschlüssig verbunden ist. In anderen Worten weist der Längslenker eine im wesentlichen längliche geometrische Konfiguration auf, wobei vorteilhafterweise an dessen distalen Enden der Aufhängungsabschnitt und der Stützabschnitt vorgesehen sind, zwischen welchen der Achsaufnahmeabschnitt angeordnet ist. Der Achsaufnahmeabschnitt weist vorteilhafterweise eine Ausnehmung bzw. Durchbrechung bzw. ein Loch auf, in welchem das Hohlzylinderelement vorgesehen ist. Das Hohlzylinderelement ist in dem Achsaufnahmeabschnitt derart angeordnet, daß es mit dem Längslenker form- und/oder kraftschlüssig verbunden ist. In anderen

Worten wird das Hohlzylinderelement zweckmäßigerweise zumindest bereichsweise von dem Längslenker umschlossen. Hierdurch entsteht eine Verbindung zwischen Hohlzylinderelement und Längslenker, über welche vorteilhafterweise hohe Momente und Kräfte übertragen werden können. In vorliegender Erfindung ist der Begriff Hohlzylinderelement nicht ausschließlich auf Hohlzylinder zu beschränken, sondern kann ebenfalls neben rohrförmigen Elementen auch zylinderartige Körper umfassen, welche nicht hohl ausgebildet sind. Durch die Verbindung von Längslenker aus Guß- oder Verbundwerkstoff und Hohlzylinderelement aus schweißfähigem Material ergibt sich somit eine Einheit, die an zusätzliche Elemente über das Hohlzylinderelement angeschweißt werden kann. Infolgedessen können vorteilhafterweise weiterhin bewährte Schweißverfahren zur Befestigung weiterer Achsbauteile angewandt werden, so daß teuere und aufwendige Kalt- und Preßschweißverfahren vermieden werden können. Darüber hinaus kann der Längslenker aus beliebigen Materialien hergestellt werden, so daß kein teuerer und Lunker-anfälliger Stahlguß verwendet werden muß. Ferner entfällt vorteilhafterweise eine aufwendige Bearbeitung der Schnittstelle vom Längslenker zu den übrigen Achsbauteilen, da diese durch das Hohlzylinderelement vorteilhafterweise übernommen werden können. Infolgedessen kann durch Verwendung von alternativen Materialien für den Längslenker, wie z.B. Aluminium oder Verbundwerkstoffe, die Aufhängungseinheit produktionstechnisch und gewichtsmäßig optimiert werden.

Der Längslenker ist aus einem Gußwerkstoff ausgebildet und das Hohlzylinderelement mit dem Längslenker insbesondere stoffschlüssig verbunden. Bevorzugterweise ist das Hohlzylinderelement hierbei in dem Achsaufnahmeabschnitt des Längslenkers eingegossen. Infolgedessen wird eine Aufhängungseinheit bereitgestellt, mittels welcher sehr hohe Kräfte und Momente vom Längslenker auf das Hohlzylinderelement bzw. die Fahrzeugachse übertragen werden können.

Vorteilhafterweise weist das Hohlzylinderelement zumindest bereichsweise auf seiner umfänglichen Außenoberfläche eine insbesondere die Oberfläche vergrößernde Profilierung und/oder eine mit Eingriffsabschnitten, beispielsweise Rillen, Gewinde oder Rändelung, versehene Oberflächenkonfiguration auf. Hierdurch ist es möglich, einen verbesserter Form- und/oder Kraftschluß zwischen Hohlzylinderelement und Achsaufnahmeabschnitt bereitzustellen. Infolgedessen ist die Verbindung zwischen Hohlzylinderelement und Achsaufnahmeabschnitt bzw. Längslenker vorteilhafterweise innig, da zumindest der eingegossene Teil des Hohlzylinderelements im Längslenker zumindest bereichsweise mit Rillen oder ähnlich die Oberfläche vergrößernder Profilierung versehen ist und zweckmäßig an der inneren und äußeren Oberfläche vom Gußmaterial des Längslenkers umgeben wird. Diese Maßnahme führt vorteilhafterweise beim Eingießen zu einer Verschweißung des Hohlzylinderelements mit dem Längslenkermaterial. Somit kann durch eine derartige Konfiguration zusätzlich eine stoffschlüssige Verbindung bereitgestellt werden.

In einer weiteren bevorzugten Ausführungsform ist die Wand des Hohlzylinderelements zumindest im Bereich des Achsaufnahmeabschnitts wenigstens teilweise durchbrochen. In anderen Worten kann zumindest der einzugießende Teil des Hohlzylinderelements wenigstens bereichsweise durchbrochen sein, so daß eine Verschweißung und folglich stoffschlüssige Verbindung zwischen Längslenker und Hohlzylinderelement weiter verbessert wird. Unabhängig von einer Verschweißung kann das Material des Längslenkers jedoch in die Vertiefung bzw. Ausnehmung bzw. Durchbruch des Hohlzylinderelements wenigstens bereichsweise hineinfließen, so daß die form- und/oder kraftschlüssige Verbindung zwischen Längslenker und Hohlzylinderelement weiter optimiert wird.

Bevorzugterweise weist das Hohlzylinderelement einen kreisrunden Querschnitt auf. Es versteht sich, daß das Hohlzylinderelement jedoch ebenfalls eine beliebig andere Querschnittskonfiguration aufweisen kann, z.B. elliptisch oder eckig oder insbesondere einen Polygonzug nachziehend.

Vorteilhafterweise ragt das Hohlzylinderelement zumindest an einer Seite des Längslenkers über diesen hervor, um entsprechende Schweißabschnitte zur Verbindung mit der Fahrzeugachse auszubilden. Infolgedessen ist das Hohlzylinderelement nicht Teil der Fahrzeugachse, sondern dient zur Verbindung des Längslenkers mit der Fahrzeugachse. Bevorzugterweise erstreckt sich das Hohlzylinderelement im wesentlichen senkrecht bzw. rechtwinklig zur Längserstreckung des Längslenkers, so daß das Hohlzylinderelement im Einbauzustand des Längslenkers im wesentlichen quer zur Fahrtrichtung angeordnet ist. Das Hohlzylinderelement kann lediglich an einer Seite des Längslenkers über diesen hervorragen, vorteilhafterweise ragt dieses jedoch auf beiden Breitseiten des Längslenkers hervor, um eine optimale Anbindung an die Fahrzeugachse zu gewährleisten. Das Hohlzylinderelement wird vorteilhafterweise auf die Fahrzeugachse oder ein hiermit assoziierte Element (wie z.B. einem Achsstummel) aufgeschoben und mit dieser/diesem verschweißt, um eine starre bzw. feste bzw. unlösbare Bindung mit der Fahrzeugachse zu erzielen. Es ist jedoch ebenfalls möglich, das Hohlzylinderelement an der Fahrzeugachse (oder einem hiermit assoziiertem Element) anschließend anzuordnen, so daß Hohlzylinderelement und Fahrzeugachse im wesentlichen "Stoß auf Stoß" zueinander stehen. An ihren Berührungsflächen sind Hohlzylinderelement und Fahrzeugachse dann miteinander verschweißt. Es sind jedoch auch beliebige andere Anbindungsformen des Hohlzylinderelements an die Fahrzeugachse denkbar.

In einer weiteren bevorzugten Ausführungsform ist das Hohlzylinderelement als Fahrzeugachse bzw. Achsrohrabschnitt oder Fahrzeugachsstummel bzw. Radkopfabschnitt bzw. Achszapfen oder Radträger ausgebildet. Vorteilhafterweise schließen sich infolgedessen Fahrzeugachse und Fahrzeugachsstummel direkt einander an. Somit ist zweckmäßigerweise kein zwischengeschalteter Längslenker zwischen Fahrzeugachse und Fahrzeugachsstummel vorgesehen, so daß eine durchgehende Verbindung zwischen Fahrzeugachse und Achsstummel gewährleistet werden kann, so daß die Belastungen für den Längslenker im Vergleich zu Lösungen, bei welchen der Achsstummel, Längslenker und Achsrohr hintereinander in Reihe angeordnet werden, deutlich reduziert wird. Aufgrund der direkten Verbindung zwischen Fahrzeugachse und Fahrzeugachsstummel können hohe Momente und Kräfte übertragen werden.

Weiterhin erfindungsgemäß ist ein Verfahren zur Herstellung einer Aufhängungseinheit für ein Fahrzeug, insbesondere Kraftfahrzeug, mit einer Starrachse, vorgesehen, umfassend die Schritte:
- Bereitstellen eines Hohlzylinderelements aus einem schweißfähigen Material,
- Vorsehen einer Längslenkerform zum Ausbilden eines Längslenkers darin,
- Einlegen des Hohlzylinderelements in die Längslenkerform und
- Ausformen des Längslenkers um das Hohlzylinderelement herum in der Längslenkerform, so daß Hohlzylinderelement und Längslenker form- und/oder kraftschlüssig verbunden sind.

Vorteilhafterweise erfolgt der Schritt des Ausformens des Längslenkers durch Ausgießen der Längslenkerform, so daß das Hohlzylinderelement mit dem Längslenker insbesondere stoffschlüssig verbunden ist.

Weiterhin vorteilhafterweise weist das Verfahren die Schritte auf:
- Anordnen des Hohlzylinderelements auf bzw. an einer Fahrzeugachse oder einem Fahrzeugachsstummel und
- Verschweißen des Hohlzylinderelements mit der Fahrzeugachse bzw. dem Fahrzeugachsstumrnel.

Alternativ hierzu kann das Hohlzylinderelement in Form einer Fahrzeugachse oder eines Fahrzeugachsstummels bereitgestellt werden, welcher mit der/dem verbleibenden Fahrzeugachse / Fahrzeugachsstummel verschweißt wird, so daß sich Fahrzeugachse und Fahrzeugachsstummel vorzugsweise direkt aneinander anschließen.

Es versteht sich, daß sämtliche Merkmale und Vorteile der erfindungsgemäßen Aufhängungseinheit für ein Fahrzeug ebenfalls in dem erfindungsgemäßen Verfahren zur Herstellung einer Aufhängungseinheit für ein Fahrzeug Anwendung finden können.

Weitere Merkmale und Vorteile der Erfindung werden nachfolgend anhand begleitender Zeichnungen bevorzugter Ausführungsformen beispielhaft beschrieben.

Es zeigen:
- Fig. 1: eine teilweise aufgeschnittene perspektivische Ansicht einer ersten Ausführungsform der erfindungsgemäßen Aufhängungseinheit;
- Fig. 2: eine teilweise aufgeschnittene perspektivische Ansicht einer zweiten Ausführungsform der erfindungsgemäßen Aufhängungseinheit; und
- Fig. 3: eine teilweise aufgeschnittene perspektivische Ansicht einer dritten Ausführungsform der erfindungsgemäßen Aufhängungseinheit.
- Fig. 4: eine teilweise aufgeschnittene perspektivische Ansicht einer vierten Ausführungsform der erfindungsgemäßen Aufhängungseinheit.

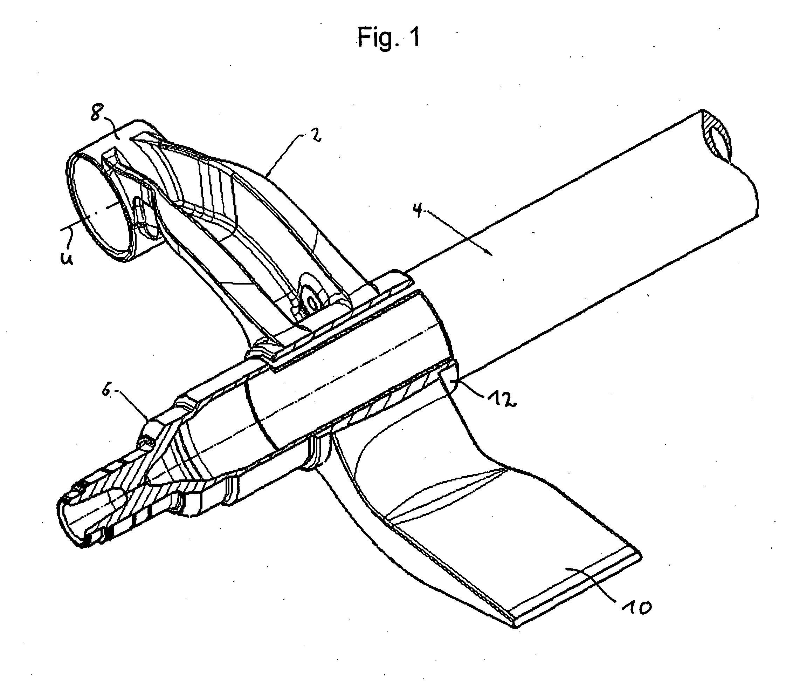

**Fig. 1** zeigt eine teilweise aufgeschnittene perspektivische Ansicht einer ersten Ausführungsform der erfindungsgemäßen Aufhängungseinheit für ein Fahrzeug, welches insbesondere als Kraftfahrzeug mit einer Starrachse ausgebildet ist. Die Aufhängungseinheit weist einen Längslenker 2 auf, welcher an einem Hohlzylinderelement angeordnet ist. Anschließend an das Hohlzylinderelement erstreckt sich ein Fahrzeugachsstummel 6, an welchem der Reifen bzw. die Felge des Fahrzeugs mittelbar oder unmittelbar angeordnet wird.

Der Längslenker 2 weist einen Aufhängungsabschnitt 8 auf, der ausgelegt ist, über eine entsprechende Schwenkachse U an einem Rahmenelement eines Fahrzeugs angelenkt zu werden. In anderen Worten ist der Längslenker 2 über die Schwenkachse U verschwenkbar. Ferner weist der Längslenker 2 einen Abstützabschnitt 10 auf, welcher im wesentlichen an einem dem Aufhängungsabschnitt 8 gegenüberliegenden distalen Ende des Längslenkers 2 vorgesehen ist. Über den Abstützabschnitt 10 ist der Längslenker 2 am Rahmenelement des Fahrzeugs abstützbar, um somit die Verschwenkung des Längslenkers zu begrenzen. Zwischen Aufhängungsabschnitt 8 und Abstützabschnitt 10 weist der Längslenker 2 einen Achsaufnahmeabschnitt 12 auf. Der Achsaufnahmeabschnitt 12 ist derart ausgebildet, daß sich durch ihn die Fahrzeugachse 4 erstrecken kann. In der vorliegenden Ausführungsform entspricht das Hohlzylinderelement einem Achsrohrabschnitt bzw. einer Fahrzeugachse 4. Der Längslenker ist aus einem Guß- oder Verbundwerkstoff hergestellt, vorzugsweise aus einem Metall gegossen. Das Hohlzylinderelement bzw. die Fahrzeugachse 4 hingegen ist vorteilhafterweise aus einem schweißfähigen Material ausgebildet, so daß dieses an weitere Teile der Fahrzeugachse, beispielsweise dem Fahrzeugachsstummel 6, anschweißbar ist. Infolgedessen ist das Hohlzylinderelement derart in dem Achsaufnahmeabschnitt 12 angeordnet, daß es mit dem Längslenker form- und/oder kraftschlüssig verbunden ist.

Vorteilhafterweise wird die Aufhängungseinheit hergestellt, indem das Hohlzylinderelement bzw. die Fahrzeugachse 4 in eine Längslenkergußform eingelegt wird und der Längslenker 2 um das Hohlzylinderelement herum gegossen wird. Infolgedessen ergibt sich vorteilhafterweise zusätzlich zu einem Form- und/oder Kraftschluß ein Stoffschluß, da vorteilhafterweise das Längslenkermaterial und das Material des Hohlzylinderelements während des Gießprozesses zumindest bereichsweise ineinander fließen. Der Stoffschluß kann insbesondere vorzugsweise verstärkt werden, indem das Hohlzylinderelement zumindest bereichsweise auf seiner umfänglichen Außenoberfläche eine insbesondere die Oberfläche vergrößernde Profilierung und/oder eine mit Eingriffsabschnitten, beispielsweise Rillen, Gewinde oder Rändelung, versehene Oberflächenkonfiguration aufweist. Diese Maßnahme führt beim Eingießen des Längslenkermaterials um das Hohlzylinderelement herum vorteilhafterweise zumindest bereichsweise zu einer Verschweißung des schweißfähigen Materials des Hohlzylinderelements (z.B. Stahl) mit dem Material des Längslenkers 2 (z.B. Grauguß). Hierdurch wird eine stabile Verbindung zwischen Längslenker 2 und Hohlzylinderelement bzw. Fahrzeugachse 4 geschaffen, ohne daß teuere und aufwendige Kalt- und Preßschweißverfahren vorgesehen werden müssen oder der Längslenker 2 aus einem Stahlguß gefertigt werden muß, welcher eine hohe Neigung zu Gießfehlern besitzt.

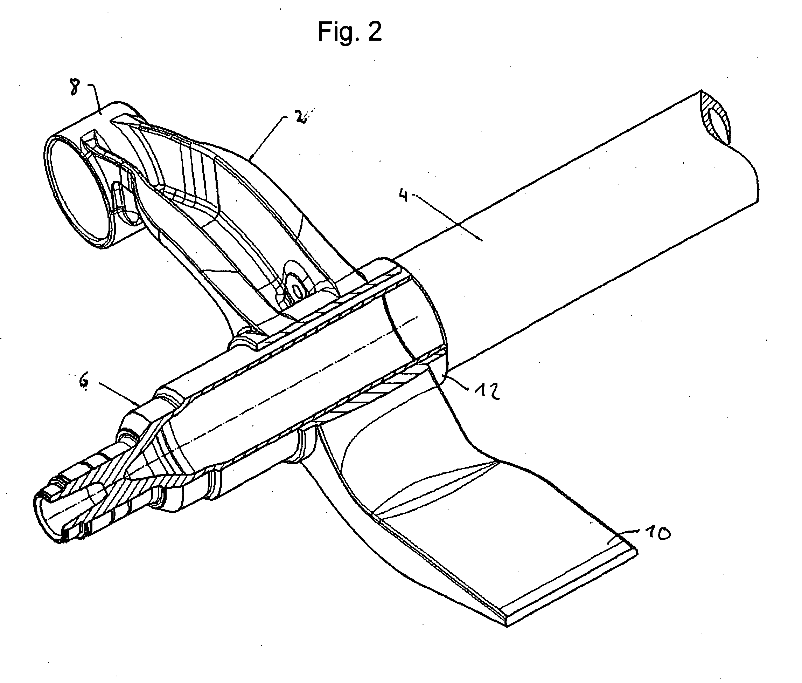

In **Fig. 2** ist eine teilweise geschnittene Perspektivansicht einer zweiten Ausführungsform der erfindungsgemäßen Aufhängungseinheit dargestellt, wobei die mit der Ausführungsform identischen Elemente mit gleichen Bezugsziffern versehen sind und nicht näher beschrieben werden. Im Unterschied zur in Fig. 1 dargestellten ersten Ausführungsform ist der Längslenker 2 nicht am Achsrohr angeordnet, sondern an einem Hohlzylinderelement, welches durch den Fahrzeugachsstummel 6 definiert wird. Wie ersichtlich ist der Begriff Hohlzylinderelement nicht dahingehend zu verstehen, daß dieses zwangsweise einen Hohlkörper definieren muß, sondern kann ebenfalls massiv ausgebildet sein. Die Anbindung des Längslenkers 2 an den Fahrzeugachsstummel 6 erfolgt entsprechend der in Fig. 1 dargestellten Ausführungsform.

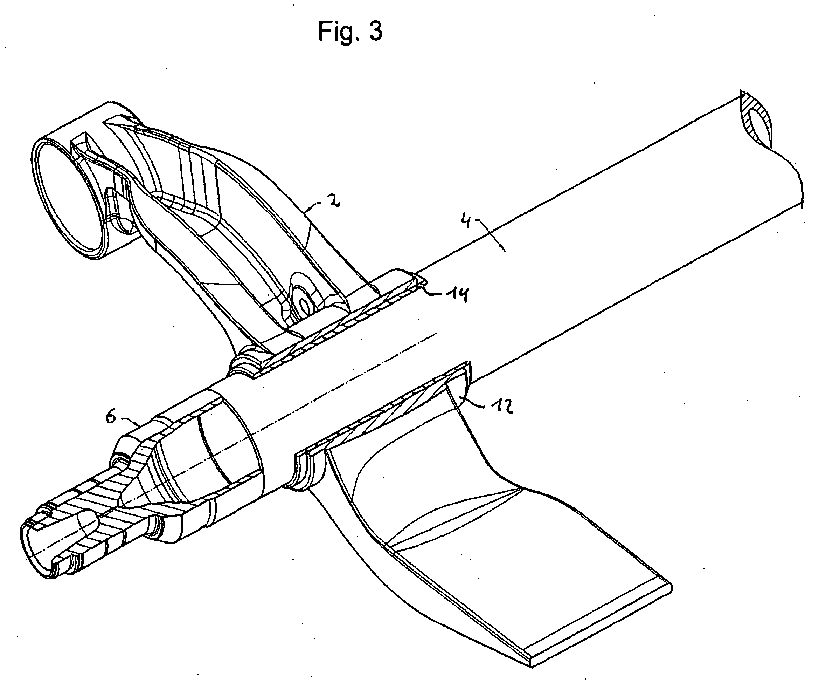

In **Fig. 3** ist eine teilweise geschnittene Perspektivansicht einer dritten Ausführungsform der erfindungsgemäßen Aufhängungseinheit dargestellt, wobei die mit der ersten Ausführungsform bzw. zweiten Ausführungsform identischen Elemente mit den gleichen Bezugsziffern versehen sind und nicht näher beschrieben werden. In dieser Ausführungsform ist der Längslenker 2 an einem rohrförmigen Hohlzylinderelement bzw. Rohrelement 14 angeordnet bzw. mit diesem in Verbindung gebracht, wobei das Rohrelement 14 nicht als eigentliches Teil der Fahrzeugachse ausgebildet ist. Das Hohlzylinderelement bzw. Rohrelement 14 stellt vielmehr ein mittelbares Element zwischen Längslenker 2 und Fahrzeugachse dar, welches über entsprechende Schweißnähte mit dem Achsrohr 4 bzw. Fahrzeugachsstummel 6 verschweißt werden kann. Hierzu ist das Rohrelement 14 vorteilhafterweise derart ausgebildet, daß es zumindest an einer Seite - vorzugsweise wie in Fig. 3 dargestellt an beiden Breitenseiten - über den Längslenker 2 hervorragt.

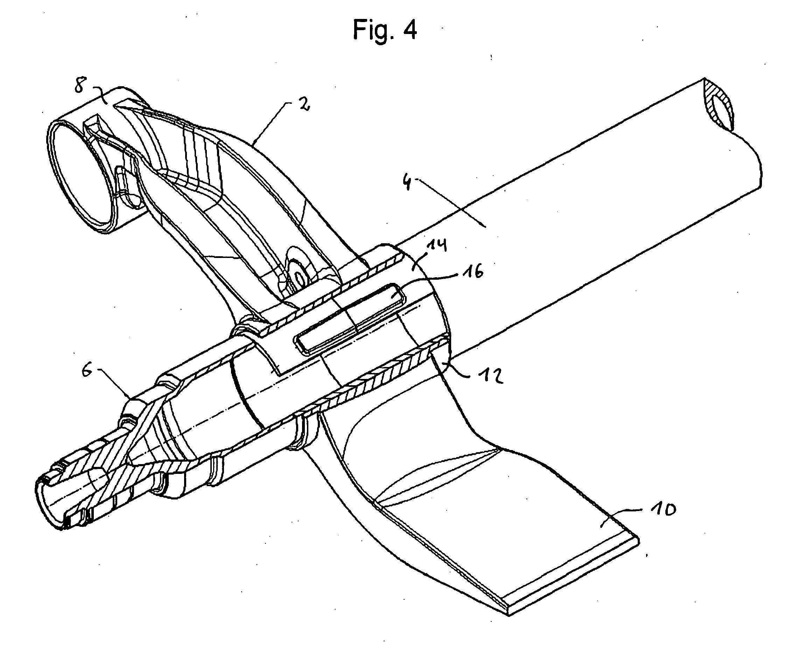

In **Fig. 4** ist eine teilweise geschnittene Perspektivansicht einer vierten Ausführungsform der erfindungsgemäßen Aufhängungseinheit dargestellt, wobei die mit der ersten, zweiten oder dritten Ausführungsform identischen Elemente mit den gleichen Bezugsziffern versehen sind und nicht näher beschrieben werden. In dieser Ausführungsform ist der Längslenker 2 an dem Rohrelement 14 entsprechend der dritten Ausführungsform angeordnet bzw. befestigt bzw. eingegossen. Jedoch ist an dem Rohrelement 14 zur Erhöhung der Stabilität der Verbindung zwischen Längslenker 2 und Rohrelement 14 zumindest ein Vorsprung 16 im Rohrelement 14 ausgebildet, welcher vom Material des Längslenkers 2 umschlossen bzw. umgossen ist. Hierdurch wird die Verdrehsicherheit zwischen Längslenker 2 und Rohrelement 14 nochmals erhöht, da der Vorsprung 16 als Sperre gegen eine Verdrehbewegung zwischen Längslenker 2 und Rohrelement 14 wirkt. Im Gegensatz zu den oben beschriebenen Ausführungsformen umgreift das Hohlzylinderelement nicht das Achsrohr 4 bzw. den Fahrzeugachsstummel 6 und ist auch nicht mit diesem verschweißt. Vielmehr ist das Hohlzylinderelement bzw. Rohrelement 14 zwischen Achsrohr 4 und Fahrzeugachsstummel 6 angeordnet, so daß sich in axialer Richtung Achsrohr 4, Rohrelement 14 und Fahrzeugachsstummel 6 aneinander anschließen. Die Verbindung zwischen Rohrelement 14 und Achsrohr 4 bzw. Fahrzeugachsstummel 6 kann vorteilhafterweise über ein Reibschweißverfahren erfolgen.

Durch die erfindungsgemäße Aufhängungseinheit wird somit die Übertragung einer deutlich höheren Belastung (Moment und Kräfte) gewährleistet, wobei nach wie vor bewährte Schweißverfahren verwendet werden können und kein teurer und Lunker-anfälliger Stahlguß für den Längslenker 2 genutzt werden muß. Auch eine aufwendige Bearbeitung der Schnittstellen zu den üblichen Achsbauteilen entfällt.

### Bezugszeichenliste:

- 2: Längslenker
- 4: Fahrzeugachse
- 6: Fahrzeugachsstummel
- 8: Aufhängungsabschnitt
- 10: Abstützabschnitt
- 12: Achsaufnahmeabschnitt
- 14: Rohrelement
- 16: Vorsprung
- u: Schwenkachse

## Patentansprüche

1. Aufhängungseinheit für ein Fahrzeug, insbesondere Kraftfahrzeug mit einer Starrachse, umfassend
einen Längslenker (2) mit einem Aufhängungsabschnitt (8), einem Abstützabschnitt (10) sowie einem Achsaufnahmeabschnitt (12), wobei
- der Aufhängungsabschnitt (8) ausgelegt ist, dreh- bzw. schwenkbar an einem Rahmenelement des Fahrzeugs angelenkt zu werden,
- der Längslenker (2) über den Abstützabschnitt (10) an dem Rahmenetement abstützbar und
- an dem zwischen dem Aufhängungsabschnitt (8) und dem Abstützabschnitt (10) angeordneten Achsaufnahmeabschnitt (12) eine Fahrzeugachse anordenbar bzw. befestigbar ist, sowie
ein Hohlzylinderelement (4; 6; 14), wobei der Längslenker (2) aus einem Guß- oder Verbundwerkstoff und das Hohlzylinderelement (4; 6; 14) aus einem schweißfähigem Material ausgebildet sind und
wobei das Hohlzylinderelement (4; 6; 14) in dem Achsaufnahmeabschnitt (12) angeordnet ist, **dadurch gekennzeichnet, dass** das Hohlzylinderelement (4;6;14) in dem Achsaufnahmeabschnitt (12) des Längslenkers (2) eingegossen ist.

2. Aufhängungseinheit nach einem der vorhergehenden Ansprüche, wobei das Hohlzylinderelement (4; 6; 14) zumindest bereichsweise auf seiner umfänglichen Außenoberfläche eine insbesondere die Oberfläche vergrößernde Profilierung und/oder eine mit Eingriffsabschnitten, beilspielsweise Rillen, Gewinde, einem Vorsprung (16) oder Rändelung, versehene Oberftächenkonfiguration aufweist.

3. Aufhängungseinheit nach einem der vorhergehenden Ansprüche, wobei die Wand des Hohlzylinderelements (4; 6; 14) zumindest im Bereich des Achsaufnahmeabschnitts (12) wenigstens teilweise durchbrochen ist.

4. Aufhängungseinheit nach einem der vorhergehenden Ansprüche, wobei das Hohlzylinderelement (4; 6; 14) einen kreisrunden Querschnitt aufweist.

5. Aufhängungseinheit nach einem der vorhergehenden Ansprüche, wobei das Hohlzylinderelement (4; 6; 14) zumindest an einer Seite des Längslenkers (2) Ober diesen hervorragt, um entsprechende Schweißabschnitte zur Verbindung mit der Fahrzeugachse (4) bzw. einem Fahrzeugachsstummel (6) auszubilden.

6. Aufhängungseinheit nach einem der vorhergehenden Ansprüche, wobei das Hohlzylinderelement (4; 6; 14) als Fahrzeugachse (4) oder Fahrzeugachsstummel (6) ausgebildet ist.

7. Aufhängungseinheit nach Anspruch 6, wobei sich Fahrzeugachse (4) und Fahrzeugachsstummel (6) direkt aneinander anschließen.

8. Verfahren zur Herstellung einer Aufhängungseinheit für ein Fahrzeug, insbesondere Kraftfahrzeug mit einer Starrachse, umfassend die Schritte:
- Bereitstellen eines Hohlzylinderelements (4; 6; 14) aus einem schweißfähigen Material,
- Vorsehen einer Längstenkerform zum Ausbilden eines Längslenkers (2) darin,
- Einlegen des Hohlzylinderelements (4; 6; 14) in die Längslenkerform und
- Ausformen des Längslenkers (2) um das Hohlzylinderelement (4; 6; 14) herum in der Längslenkerform, so daß Hohlzylinderelement (4; 6; 14) und Längslenker (2) form- und/oder kraftschlüssig verbunden sind, **dadurch gekennzeichnet, dass** der Schritt des Ausformens des Längslenkers (2) durch Ausgießen der Längslenkerform, erfolgt.

9. Verfahren nach Anspruch 8, wobei das Hohlzylinderelement (4; 6; 14) mit dem Längslenker (2) insbesondere stoffschlüssig verbunden ist.

10. Verfahren nach einem der Ansprüche 8 oder 9, weiterhin aufweisend die Schritte:
- Anordnen des Hohlzylinderelements (14) auf bzw. an einer Fahrzeugachse (4) oder einem Fahrzeugachsstummel (6) und
- Verschweißen des Hohlzylinderelements (14) mit der Fahrzeugachse (4) bzw. dem Fahrzeugachsstummel (6).

11. Verfahren nach einem der Ansprüche 8, oder 9, wobei das Hohlzylinderelement (4; 6) in Form einer Fahrzeugachse (4) oder eines Fahrzeugachsstummels (6) bereitgestellt wird, welcher mit der verbleibenden Fahrzeugachse (4) bzw. dem Fahrzeugachsstummel (6) verschweißt wird, so daß sich Fahrzeugachse (4) und Fahrzeugachsstummel (6) vorzugsweise direkt aneinander anschließen.

## Claims

1. A suspension unit for a vehicle, in particular a motor vehicle having a rigid axle, comprising
a trailing arm (2) having a suspension portion (8), a support portion (10) and an axle reception portion (12), wherein
- the suspension portion (8) is configured to rotationally and pivotally articulate to the frame element of the vehicle,
- the trailing arm (2), via the support portion (10), can be supported at the frame element, and
- at the axle reception portion (12), being located between the suspension portion (8) and the support portion (10), a vehicle axle can be arranged or fixed, as well as
a hollow cylindrical or hollow-cylinder element (4; 6; 14), wherein the trailing arm (2) is made of a casting material or a composite material and the hollow-cylinder element (4; 6; 14) is made of a weldable material, and
wherein the hollow-cylinder element (4; 6; 14) is located in the axle reception portion (12), **characterized in that** the hollow-cylinder element (4; 6; 14) is cast integral with the axle reception portion (12) of the trailing arm (2).

2. The suspension unit according to the preceding claim, wherein the hollow-cylinder element (4; 6; 14) has, at least partially on its circumferential outer surface, a profiling which in particular increases the surface area, and/or a surface configuration which is provided with engaging portions, for example groovings, threads, a protrusion (16) or knurl.

3. The suspension unit according to any one of the preceding claims, wherein the wall of the hollow-cylinder element (4; 6; 14) is at least partially broken or pierced in the area of the axle reception portion (12).

4. The suspension unit according to any one of the preceding claims, wherein the hollow-cylinder element (4; 6; 14) has a circular cross-section.

5. The suspension unit according to any one of the preceding claims, wherein the hollow-cylinder element (4; 6; 14) protrudes at least on one side from the trailing arm (2) so as to form respective welding portions for connection to the vehicle axle (4) or a vehicle axle stub (6).

6. The suspension unit according to any one of the preceding claims, wherein the hollow-cylinder element (4; 6; 14) is designed as a vehicle axle (4) or a vehicle axle stub (6).

7. The suspension unit according to claim 6, wherein the vehicle axle (4) and the vehicle axle stub (6) directly adjoin one another.

8. A method for the manufacture of a suspension unit for a vehicle, in particular a motor vehicle having a rigid axle, comprising the steps of
- providing a hollow-cylinder element (4; 6; 14) made of a weldable material,
- providing a trailing arm mould to be used for forming a trailing arm (2) therein,
- inlaying the hollow-cylinder element (4; 6; 14) into the trailing arm mould and
- shaping the trailing arm around the hollow-cylinder element (4; 6; 14) in the trailing arm mould such that the hollow-cylinder element (4; 6; 14) and the trailing arm are connected in a form-fitting and/or force-fitting manner, **characterized in that** the step of shaping the trailing arm (2) is carried out by filling the trailing arm mould.

9. The method according to claim 8, wherein the hollow-cylinder element (4; 6; 14) is connected with the trailing arm (2), in particular, in a material-bonded manner.

10. The method according to any one of claims 8 or 9, further comprising the steps of:
- arranging the hollow-cylinder element (14) on or at a vehicle axle (4) or a vehicle axle stub (6) and
- welding the hollow-cylinder element (14) to the vehicle axle (4) or the vehicle axle stub (6).

11. The method according to any one of claims 8 or 9, wherein the hollow-cylinder element (4; 6) is provided in the shape of a vehicle axle (4) or a vehicle axle stub (6) which is welded to the remaining vehicle axle (4) or the vehicle axle stub (6) such that the vehicle axle (4) and the vehicle axle stub (6) preferably directly adjoin one another.

## Revendications

1. Unité de suspension pour un véhicule, en particulier véhicule automobile avec un essieu rigide, comprenant
un bras de suspension longitudinal (2) avec un tronçon de suspension (8), un tronçon de soutien (10) ainsi qu'un tronçon de réception d'essieu (12), dans laquelle
- le tronçon de suspension (8) est conçu pour être articulé en rotation ou en pivotement sur un élément du châssis du véhicule,
- le bras de suspension longitudinal (2) peut être soutenu sur l'élément de châssis via le tronçon de soutien (10), et
- un essieu du véhicule est susceptible d'être agencé ou fixé sur le tronçon de réception d'essieu (12) agencé entre le tronçon de suspension (8) et le tronçon de soutien (10), et
un élément cylindrique creux (4; 6; 14), dans laquelle le bras de suspension longitudinal (2) est réalisé en un matériau de fonderie ou un matériau composite, et l'élément cylindrique creux (4; 6; 14) est réalisé en un matériau capable d'être soudé, et
dans laquelle l'élément cylindrique creux (4; 6; 14) est agencé dans le tronçon de réception d'essieu (12),
**caractérisée en ce que** l'élément cylindrique creux (4; 6; 14) est intégré par coulée dans le tronçon de réception d'essieu (12) du bras de suspension longitudinal (2).

2. Unité de suspension selon l'une des revendications précédentes, dans laquelle l'élément cylindrique creux (4; 6; 14) comporte sur sa surface extérieure périphérique un profilage qui augmente en particulier la surface et/ou une configuration de surface dotée de tronçons d'engagement, par exemple des rainures, un pas de vis, une saillie (16) ou un moletage.

3. Unité de suspension selon l'une des revendications précédentes, dans laquelle la paroi de l'élément cylindrique creux (4; 6; 14) est au moins partiellement interrompue, au moins dans la région du tronçon de réception d'essieu (12).

4. Unité de suspension selon l'une des revendications précédentes, dans laquelle l'élément cylindrique creux (4; 6; 14) présente une section transversale circulaire.

5. Unité de suspension selon l'une des revendications précédentes, dans laquelle l'élément cylindrique creux (4; 6; 14) dépasse au-delà du bras de suspension longitudinal (2) au moins sur un côté de celui-ci, pour réaliser des tronçons de soudage correspondants en vue de la liaison avec l'essieu (4) ou avec un moignon d'essieu (6) du véhicule.

6. Unité de suspension selon l'une des revendications précédentes, dans laquelle l'élément cylindrique creux (4; 6; 14) est réalisé sous forme d'essieu (4) ou de moignon d'essieu (6) du véhicule.

7. Unité de suspension selon la revendication 6, dans laquelle l'essieu (4) et le moignon d'essieu (6) du véhicule se raccordent directement l'un à l'autre.

8. Procédé pour la réalisation d'une unité de suspension pour un véhicule, en particulier un véhicule automobile avec un essieu rigide, comprenant les opérations consistant à:
- préparer un élément cylindrique creux (4; 6; 14) en un matériau capable d'être soudé,
- fournir d'un moule de bras de suspension longitudinal pour réaliser un bras de suspension longitudinal (2) dans celui-ci,
- poser l'élément cylindrique creux (4; 6; 14) dans le moule de bras de suspension longitudinal, et
- mettre en forme du bras de suspension longitudinal (2) autour de l'élément cylindrique creux (4; 6; 14) dans le moule de bras de suspension longitudinal, de sorte que l'élément cylindrique creux (4; 6; 14) et le bras de suspension longitudinal (2) sont reliés par coopération de formes et/ou par coopération de forces, **caractérisé en ce que** l'étape de mise en forme du bras de suspension longitudinal (2) a lieu par coulée dans le moule de bras de suspension longitudinal.

9. Procédé selon la revendication 8, dans lequel l'élément cylindrique creux (4; 6; 14) est relié, en particulier par coopération de matières, avec le bras de suspension longitudinal (2).

10. Procédé selon l'une des revendications 8 ou 9, comprenant en outre les opérations consistant à :
- agencer l'élément cylindrique creux (14) sur ou contre un essieu (4) ou un moignon d'essieu (6) du véhicule; et
- souder l'élément cylindrique creux (14) avec l'essieu (4) ou avec le moignon d'essieu (6) du véhicule.

11. Procédé selon l'une des revendications 8 ou 9, dans lequel l'élément cylindrique creux (4; 6) est préparé sous la forme d'un essieu (4) ou d'un moignon d'essieu (6) du véhicule, lequel est soudé avec l'essieu (4) ou le moignon d'essieu (6) restant du véhicule, de sorte que l'essieu (4) et le moignon d'essieu (6) du véhicule se raccordent de préférence directement l'un à l'autre.
